# EUROPEAN PATENT APPLICATION

(11) **EP 4 557 406 A1**
(43) Date of publication of application: **21.05.2025**
(21) Application number: 23877596.9
(22) Date of filing: 06.10.2023
(51) Int. Cl.: H01M 4/62, H01M 4/525, H01M 4/505, H01M 4/48, H01M 4/587, H01M 4/38, H01M 10/052

(54) **LITHIUM SECONDARY BATTERY**

(30) Priority: 11.10.2022 KR 20220129606; 26.09.2023 KR 20230129061
(71) Applicant: LG Energy Solution, Ltd., Seoul 07335 (KR)
(72) Inventor: KIM, Minsoo, Daejeon 34122 (KR); BAEK, Sora, Daejeon 34122 (KR); KIM, Shulkee, Daejeon 34122 (KR); PARK, Kyutae, Daejeon 34122 (KR); PIAO, Lilin, Daejeon 34122 (KR); YOO, Kwang Ho, Daejeon 34122 (KR); LEE, Gyeongseop, Daejeon 34122 (KR); JUNG, Wonhee, Daejeon 34122 (KR)
(74) Representative: Plasseraud IP
(86) International application number: PCT/KR2023/015370
(87) International publication number: WO 2024/080668

(57) **Abstract**

The present invention relates to a lithium secondary battery including: a positive electrode, a separator and a negative electrode, in which the positive electrode includes a positive electrode active material and a positive electrode conductive material, the negative electrode includes a negative electrode active material and a negative electrode conductive material, the positive electrode active material includes a lithium composite transition metal compound including nickel (Ni) and cobalt (Co), the negative electrode active material includes silicon oxide, artificial graphite, and natural graphite, the positive electrode conductive material includes a particulate conductive material, a linear conductive material, and a planar conductive material, and the negative electrode conductive material includes a particulate conductive material, a linear conductive material, and a planar conductive material.

## Description

### [Technical Field]

The present specification claims priority to and the benefit of Korean Patent Application Nos. 10-2022-0129606 and 10-2023-0129061 filed in the Korean Intellectual Property Office on October 11, 2022 and September 26, 2023, respectively, the entire contents of which are incorporated herein by reference.

The present invention relates to a lithium secondary battery.

### [Background Art]

Secondary batteries are universally applied not only to portable devices but also to electric vehicles (EVs) and hybrid electric vehicles (HEVs), which are driven by electric driving sources.

Since such a secondary battery has not only the primary advantage of being able to dramatically reduce the use of fossil fuels, but also the advantage of not generating any by-products caused by the use of energy, the secondary battery is attracting attention as a new energy source that is environmentally friendly and improves energy efficiency.

In general, a secondary battery includes a positive electrode, a negative electrode, a separator interposed between the positive electrode and the negative electrode, an electrolyte, and the like. Further, an electrode such as a positive electrode and a negative electrode may have an electrode active material layer provided on a current collector.

As the utilization of secondary batteries increases, various battery performances are required. Although attempts have been appropriately made to change the composition of the electrode active material layer in order to improve battery performance, some performance of the battery may be improved depending on the selection or combination of the material, but some performance may rather deteriorate. Therefore, there is a need for research on the selection or combination of materials suitable for the performance of a secondary battery to be improved.

### [Detailed Description of the Invention]

### [Technical Problem]

The present invention has been made in an effort to provide a lithium secondary battery with improved resistance characteristics.

### [Technical Solution]

An exemplary embodiment of the present invention provides a lithium secondary battery including:
a positive electrode, a separator and a negative electrode,
in which the positive electrode includes a positive electrode active material and a positive electrode conductive material,
the negative electrode includes a negative electrode active material and a negative electrode conductive material,
the positive electrode active material includes a lithium composite transition metal compound including nickel (Ni) and cobalt (Co),
the negative electrode active material includes silicon oxide, artificial graphite, and natural graphite,
the positive electrode conductive material includes a particulate conductive material, a linear conductive material, and a planar conductive material, and
the negative electrode conductive material includes a particulate conductive material, a linear conductive material, and a planar conductive material.

### [Advantageous Effects]

According to the embodiments described in the present specification, the positive electrode and the negative electrode use a specific type of active material, and simultaneously include a particulate conductive material, a linear conductive material and a planar conductive material as the conductive material, so that it is possible to have an improved rapid charging effect because the conductivity at both the positive electrode and the negative electrode is improved to significantly improve the cell resistance characteristics.

### [Brief Description of Drawings]

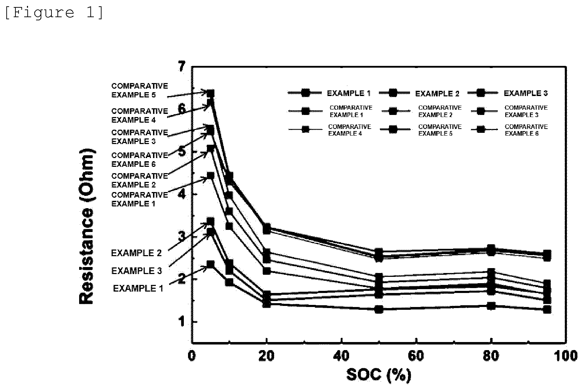

FIG. 1 is a graph showing the resistance values depending on the state of charge (SOC) of the batteries manufactured in Examples 1 to 3 and Comparative Examples 1 to 6.

### [Best Mode]

Hereinafter, the present invention will be described in more detail in order to help the understanding of the present invention. The present invention can be implemented in various different forms, and is not limited to the exemplary embodiments described herein. In this case, terms or words used in the specification and the claims should not be interpreted as being limited to typical or dictionary meanings, and should be interpreted with a meaning and a concept that are consistent with the technical spirit of the present invention based on the principle that an inventor can appropriately define a concept of a term in order to describe his/her own invention in the best way.

In the present invention, the term "comprise", "include", or "have" is intended to indicate the presence of the characteristic, number, step, constituent element, or any combination thereof implemented, and should be understood to mean that the presence or addition possibility of one or more other characteristics or numbers, steps, constituent elements, or any combination thereof is not precluded.

Further, a case where a part such as a layer is present "above" or "on" another part includes not only a case where the part is present "immediately above" another part, but also a case where still another part is present therebetween. Conversely, the case where a part is present "immediately above" another part means that no other part is present therebetween. In addition, a case of being "above" or "on" a reference part means being located above or below the reference part, and does not necessarily mean being located "above" or "on" in the opposite direction of gravity.

The lithium secondary battery according to an exemplary embodiment of the present specification is characterized by including a positive electrode, a separator, and a negative electrode, in which the positive electrode includes a positive electrode active material and a positive electrode conductive material, the negative electrode includes a negative electrode active material and a negative electrode conductive material, the positive electrode active material includes a lithium composite transition metal compound including nickel (Ni) and cobalt (Co), and the negative electrode active material includes silicon oxide, artificial graphite, and natural graphite. In addition, the positive electrode conductive material includes a particulate conductive material, a linear conductive material, and a planar conductive material, and the negative electrode conductive material includes a particulate conductive material, a linear conductive material, and a planar conductive material.

The present inventors found that when the above-described active material is used at the positive electrode and the negative electrode, a particulate conductive material, a linear conductive material, and a planar conductive material are simultaneously added to the positive electrode, and a particulate conductive material, a linear conductive material, and a planar conductive material are simultaneously added to the negative electrode, cell resistance can be significantly improved, thereby completing the present invention.

According to an exemplary embodiment, the lithium composite transition metal compound including nickel (Ni) and cobalt (Co) may include 80 mol% or more, for example, 80 mol% or more and less than 100 mol% of nickel among the metals except for lithium. When the nickel content is high as described above, the positive electrode efficiency may be increased to implement the high energy density of a battery.

According to an exemplary embodiment, the lithium composite transition metal compound including nickel (Ni) and cobalt (Co) may further include at least one of manganese and aluminum. Specifically, the lithium composite transition metal compound including nickel (Ni) and cobalt (Co) may be represented by the following Chemical Formula 1.

[Chemical Formula 1] LiₐNi_{(1-x-y)}CoₓM1_{y}M2_{w}O₂

In Chemical Formula 1,
1.0≤a≤1.5, 0<x≤0.2, 0≤y≤0.2, 0≤w≤0.1, 0<x+y≤0.2,
M1 is at least one metal of Mn and Al, and
M2 is one or more metal elements selected from the group consisting of Ba, Ca, Zr, Ti, Mg, Ta, Nb, and Mo.

According to an exemplary embodiment, the positive electrode may include 90 parts by weight to 100 parts by weight of the lithium composite transition metal compound including nickel (Ni) and cobalt (Co) based on 100 parts by weight of the positive electrode active material.

In an exemplary embodiment of the present specification, the silicon oxide is SiOₓ (0<x<2).

The silicon oxide may be included in an amount of 1 part by weight to 40 parts by weight, for example, 1 part by weight to 20 parts by weight based on total 100 parts by weight of the negative electrode active material.

The active material including SiOₓ (0<x<2) as the silicon oxide may be a silicon oxide composite particle including SiOₓ (0<x<2) and pores.

The SiOₓ(0<x<2) corresponds to a matrix in the silicon oxide composite particle. The SiOₓ (0<x<2) may be in a form including Si and SiO₂, and the Si may also form a phase. That is, the x corresponds to the number ratio of O for Si included in the SiOₓ (0<x<2). When the silicon oxide composite particles include the SiOₓ (0<x<2), the discharge capacity of a secondary battery may be improved.

The silicon oxide composite particles may further include at least one of a Mg compound and a Li compound. The Mg compound and Li compound may correspond to a matrix in the silicon oxide composite particle.

The Mg compound and/or Li compound may be present inside and/or on the surface of the SiOₓ (0<x<2). The initial efficiency of the battery may be improved by the Mg compound and/or Li compound.

The Mg compound may include at least any one selected from the group consisting of Mg silicates, Mg silicides and Mg oxides. The Mg silicate may include at least any one of Mg₂SiO₄ and MgSiO₃. The Mg silicide may include Mg₂Si. The Mg oxide may include MgO.

In an exemplary embodiment of the present specification, the Mg element may be included in an amount of 0.1 wt% to 20 wt%, or 0.1 wt% to 10 wt% based on total 100 wt% of the silicon oxide. Specifically, the Mg element may be included in an amount of 0.5 wt% to 8 wt% or 0.8 wt% to 4 wt%. When the above range is satisfied, the Mg compound may be included in an appropriate content in the silicon oxide, so that the volume change of the silicon oxide during the charging and discharging of a battery may be readily suppressed, and the discharge capacity and initial efficiency of the battery may be improved.

The Li compound may include at least any one selected from the group consisting of Li silicates, Li silicides and Li oxides. The Li silicate may include at least any one of Li₂SiO₃, Li₄SiO₄ and Li₂Si₂O₅. The Li silicide may include Li₇Si₂. The Li oxide may include Li₂O.

In an exemplary embodiment of the present invention, the Li compound may be present in the form of a lithium silicate. The lithium silicate is represented by LiₐSi_{b}O_{c} (2≤a≤4, 0<b≤2, 2≤c≤5) and may be classified into crystalline lithium silicate and amorphous lithium silicate. The crystalline lithium silicate may be present in the form of at least one lithium silicate selected from the group consisting of Li₂SiO₃, Li₄SiO₄, and Li₂Si₂O₅ in the silicon oxide composite particles, and the amorphous lithium silicate may be in the form of LiₐSi_{b}O_{c} (2≤a≤4, 0<b≤2, 2≤c≤5), and are not limited to the forms.

In an exemplary embodiment of the present specification, the Li element may be included in an amount of 0.1 wt% to 20 wt%, or 0.1 wt% to 10 wt% based on total 100 wt% of the silicon oxide active material.
Specifically, the Li element may be included in an amount of 0.5 wt% to 8 wt%, more specifically 0.5 wt% to 4 wt%. When the above range is satisfied, the Li compound may be included in an appropriate content in the silicon oxide active material, so that the volume change of the negative electrode active material during the charging and discharging of a battery may be readily suppressed, and the discharge capacity and initial efficiency of the battery may be improved.

The content of the Mg element or Li element may be confirmed by ICP analysis. For the ICP analysis, after a predetermined amount (about 0.01 g) of the negative electrode active material is exactly aliquoted, the negative electrode active material is completely decomposed on a hot plate by transferring the aliquot to a platinum crucible and adding nitric acid, hydrofluoric acid, or sulfuric acid thereto. Thereafter, a reference calibration curve is prepared by measuring the intensity of a standard liquid prepared using a standard solution (5 mg/kg) in an intrinsic wavelength of the Mg element or Li element using an inductively coupled plasma atomic emission spectrometer (ICPAES, Perkin-Elmer 7300). Thereafter, a pre-treated sample solution and a blank sample are each introduced into the apparatus, an actual intensity is calculated by measuring each intensity, the concentration of each component relative to the prepared calibration curve is calculated, and then the contents of the Mg element or the Li element of the prepared silicon oxide active material may be analyzed by converting the total sum so as to be the theoretical value.

In an exemplary embodiment of the present specification, a carbon layer may be provided on the surface of the silicon oxide composite particles and/or inside pores. By the carbon layer, conductivity is imparted to the silicon oxide composite particles, and the initial efficiency, service life characteristics, and battery capacity characteristics of a secondary battery including the negative electrode active material including the silicon oxide composite particles may be improved. The total weight of the carbon layer may be 5 wt% to 40 wt% based on total 100 wt% of the silicon oxide composite particles.

In an exemplary embodiment of the present specification, the carbon layer may include at least any one of amorphous carbon and crystalline carbon.

The silicon oxide active material may have an average particle diameter (D50) of 2 µm to 15 µm, specifically 3 µm to 12 µm, and more specifically 4 µm to 10 µm. When the above range is satisfied, side reactions between the silicon oxide composite particles and an electrolyte solution may be controlled, and the discharge capacity and initial efficiency of the battery may be effectively implemented.

In the present specification, the average particle diameter (D50) may be defined as a particle diameter corresponding to 50% of the volume cumulative amount in a particle diameter distribution curve of the particles. The average particle diameter (D50) may be measured using, for example, a laser diffraction method. The laser diffraction method can generally measure a particle diameter of about several mm from the submicron region, and results with high reproducibility and high resolution may be obtained.

In an exemplary embodiment of the present specification, the negative electrode active material including the artificial graphite and the natural graphite may be included in an amount of 60 parts by weight or more and 99 parts by weight or less based on 100 parts by weight of the negative electrode active material. The artificial graphite and the natural graphite may be included at a weight ratio of 1:9 to 9:1, for example, 2:8 to 8:2, specifically 3:7 to 7:3.

According to an exemplary embodiment, the positive electrode conductive material includes a particulate conductive material, a linear conductive material, and a planar conductive material, and the negative electrode conductive material includes a particulate conductive material, a linear conductive material, and a planar conductive material. According to the exemplary embodiment, a particulate conductive material, a linear conductive material, and a planar conductive material may be included in both the positive electrode and the negative electrode, and they do not need to be of the same type or composition. The same type of particulate conductive material, linear conductive material, and planar conductive material included in the positive electrode and the negative electrode may be used, or different types may be used.

The total amount of the particulate conductive material, linear conductive material, and planar conductive material is 0.1 parts by weight to 5 parts by weight, preferably 0.2 parts by weight or more and 2 parts by weight or less, or may be 0.2 parts by weight or more and 4.5 parts by weight or less, based on 100 parts by weight of each of the positive electrode active material layer and the negative electrode active material layer. When the particulate conductive material, the linear conductive material, and the planar conductive material are used in mixtures in the aforementioned amounts, by filling the pores, which are empty spaces between active material particles, with the planar conductive material in a state mixed with a binder, physical contact between the active materials is improved to reduce interfacial resistance, and adhesion between the lower positive electrode active material and the current collector may be improved. Further, since the conductive path can be improved by the linear conductive material and the planar conductive material, the electrical conductivity is improved, and an effect of improving the diffusion resistance may be obtained. From this, it is possible to show an effect of improving cell resistance and high-temperature durability by improving the resistance at the interface between the current collector and the active material layer.

The particulate conductive material means a conductive material having a spherical particle shape and a diameter (D50) in a range of 10 nm to 500 nm, is, for example, graphite such as natural graphite or artificial graphite; carbon black such as acetylene black, Ketjen black, channel black, furnace black, lamp black or thermal black, and may include one or two or more of them.

The linear conductive material means a conductive material having an elliptical particle shape and an aspect ratio (a ratio of length/diameter) in a range of 50 to 650, is, for example, a conductive fiber such as carbon fiber or metal fiber; a conductive tube such as a carbon nanotube such as a single-walled carbon nanotube or a multi-walled carbon nanotube; fluorocarbon; a metal powder such as aluminum and nickel powders; a conductive whisker such as zinc oxide or potassium titanate; a conductive metal oxide such as titanium oxide; a conductive material such as a polyphenylene derivative, and the like, and may include one or two or more of them.

The planar conductive material means a conductive material having a two-dimensional axis and an aspect ratio of 1:1 to 1:10, and is, for example, graphene, graphite, or the like.

According to an exemplary embodiment, the positive electrode conductive material may be included in an amount of 0.1 parts by weight to 5 parts by weight based on 100 parts by weight of the positive electrode active material layer including the positive electrode active material. Further, the amount of the negative electrode conductive material may be 0.1 parts by weight to 5 parts by weight based on 100 parts by weight of the negative electrode active material layer including the negative electrode active material. Within this range, there is an advantage in that the range of cell resistance improvement can be further increased by improving the electrical conductivity inside the electrode.

According to an exemplary embodiment, the content ratio of the particulate conductive material, the linear conductive material, and the planar conductive material included in the positive electrode conductive material or the negative electrode conductive material may be 0.3 parts by weight to 2 parts by weight for the particulate conductive material, 0.01 parts by weight to 1 part by weight for the linear conductive material, and 0.5 parts by weight to 3 parts by weight for the planar conductive material, based on 100 parts by weight of the positive electrode active material layer or the negative electrode active material layer.

As the positive electrode and the negative electrode, the same type may be used, or different types may be used.

According to an exemplary embodiment, the negative electrode may include a current collector and a negative electrode active material layer provided on the current collector.

The negative electrode active material in 100 parts by weight of the negative electrode active material layer may be included in an amount of 80 parts by weight or more and 99.9 parts by weight or less, preferably 80 parts by weight or more and 90 parts by weight or less.

According to an exemplary embodiment of the present specification, the negative electrode active material layer may further include a negative electrode binder in addition to the negative electrode active material and the negative electrode conductive material.

The negative electrode binder may serve to improve the bonding between negative electrode active material particles and the adhesion between the negative electrode active material particles and the negative electrode current collector. As the negative electrode binder, those known in the art may be used, and non-limiting examples thereof may include at least one selected from the group consisting of a polyvinylidene fluoride-hexafluoropropylene copolymer (PVDF-co-HFP), polyvinylidene fluoride, polyacrylonitrile, polymethylmethacrylate, polyvinyl alcohol, carboxymethyl cellulose (CMC), starch, hydroxypropyl cellulose, regenerated cellulose, polyvinylpyrrolidone, tetrafluoroethylene, polyethylene, polypropylene, polyacrylic acid, an ethylene-propylene-diene monomer (EPDM), a sulfonated EPDM, styrene butadiene rubber (SBR), fluorine rubber, polyacrylic acid and a material in which the hydrogen thereof is substituted with Li, Na, Ca, or the like, and may also include various copolymers thereof.

The negative electrode binder may be included in an amount of 0.1 parts by weight or more and 20 parts by weight or less, for example, preferably 0.3 parts by weight or more and 20 parts by weight or less, and more preferably 0.5 parts by weight or more and 10 parts by weight or less, based on 100 parts by weight of the negative electrode active material layer.

In an exemplary embodiment of the present specification, the negative electrode active material layer may have a thickness of 5 µm or more and 500 µm or less.

In an exemplary embodiment of the present application, the negative electrode current collector is sufficient as long as the negative electrode current collector has conductivity without causing a chemical change to the battery, and is not particularly limited. For example, as the current collector, it is possible to use copper, stainless steel, aluminum, nickel, titanium, fired carbon, or aluminum or stainless steel whose surface is treated with carbon, nickel, titanium, silver, and the like. Specifically, a transition metal, such as copper or nickel which adsorbs carbon well, may be used as a current collector. Although the current collector may have a thickness of 1 µm to 500 µm, the thickness of the current collector is not limited thereto.

In an exemplary embodiment of the present specification, the positive electrode includes a positive electrode current collector and a positive electrode active material layer formed on the positive electrode current collector and including the lithium composite transition metal compound including nickel (Ni) and cobalt (Co). The positive electrode active material layer may have a thickness of 20 µm or more and 500 µm or less.

The positive electrode current collector is not particularly limited as long as the collector has conductivity without causing a chemical change to a battery, and for example, it is possible to use stainless steel, aluminum, nickel, titanium, calcined carbon, or aluminum or stainless steel whose surface is treated with carbon, nickel, titanium, silver, and the like. Further, the positive electrode current collector may typically have a thickness of 1 to 500 µm, and the adhesion of the positive electrode active material may also be enhanced by forming fine irregularities on the surface of the current collector. For example, the positive electrode current collector may be used in various forms such as a film, a sheet, a foil, a net, a porous body, a foam body, and a non-woven fabric body.

In an exemplary embodiment, the positive electrode active material in 100 parts by weight of the positive electrode active material layer may be included in an amount of 80 parts by weight or more and 99.9 parts by weight or less, preferably 80 parts by weight or more and 99 parts by weight or less.

According to an additional exemplary embodiment of the present specification, the positive electrode active material layer may further include a positive electrode binder.

The positive electrode binder may serve to improve the bonding between positive electrode active material particles and the adhesion between the positive electrode active material particles and the positive electrode current collector. As the positive electrode binder, those known in the art may be used, non-limiting examples thereof include polyvinylidene fluoride (PVDF), a vinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, tetrafluoroethylene, polyethylene, polypropylene, an ethylene-propylene-diene monomer (EPDM), a sulfonated EPDM, styrene-butadiene rubber (SBR), fluorine rubber, or various copolymers thereof, and any one thereof or a mixture of two or more thereof may be used.

The positive electrode binder may be included in an amount of 0.1 parts by weight or more and 50 parts by weight or less, for example, preferably 0.3 parts by weight or more and 35 parts by weight or less, and more preferably 0.5 parts by weight or more and 20 parts by weight or less, based on 100 parts by weight of the positive electrode active material layer.

The positive electrode and the negative electrode may be manufactured by a method for manufacturing a positive electrode and a negative electrode in the related art, except that the aforementioned positive electrode and negative electrode active materials and the conductive material are used. Specifically, after a composition for forming an active material layer, which includes the aforementioned active material and, optionally, a binder and a conductive material is applied onto current collectors, the positive electrode and negative electrode may be manufactured by drying and rolling the current collectors. In this case, the types and contents of the positive and negative electrode active materials, binders, and conductive materials are as described above. The solvent may be a solvent commonly used in the art, examples thereof include dimethyl sulfoxide (DMSO), isopropyl alcohol, N-methylpyrrolidone (NMP), acetone, water, or the like, and among them, any one thereof or a mixture of two or more thereof may be used. The amount of solvent used is sufficient as long as the solvent in the amount dissolves or disperses the active material, conductive material and binder in consideration of the application thickness and preparation yield of the slurry, and has a viscosity capable of exhibiting excellent thickness uniformity during subsequent application for manufacturing the positive electrode and the negative electrode. Alternatively, by another method, the positive electrode and the negative electrode may be manufactured by casting the composition for forming an active material layer on a separate support and then laminating a film obtained by performing peel-off from the support on a current collector.

The positive electrode and the negative electrode may further include an additional additive, for example, a thickener, if necessary. The thickener may include sodium carboxymethyl cellulose (Na-CMC), carboxymethyl cellulose lithium (Li-CMC), cellulose nano fiber (CNF), and the like.

The separator separates the negative electrode and the positive electrode and provides a passage for movement of lithium ions, and can be used without particular limitation as long as the separator is typically used as a separator in a secondary battery, and in particular, a separator having an excellent ability to retain moisture of an electrolytic solution as well as low resistance to ion movement in the electrolyte is preferable. Specifically, it is possible to use a porous polymer film, for example, a porous polymer film formed of a polyolefin-based polymer such as an ethylene homopolymer, a propylene homopolymer, an ethylene/butene copolymer, an ethylene/hexene copolymer, and an ethylene/methacrylate copolymer, or a laminated structure of two or more layers thereof. In addition, a typical porous non-woven fabric, for example, a non-woven fabric made of a glass fiber having a high melting point, a polyethylene terephthalate fiber, and the like may also be used. Furthermore, a coated separator including a ceramic component or a polymeric material may be used to secure heat resistance or mechanical strength and may be selectively used as a single-layered or multi-layered structure.

Examples of the electrolyte include an organic liquid electrolyte, an inorganic liquid electrolyte, a solid polymer electrolyte, a gel-type polymer electrolyte, a solid inorganic electrolyte, a molten-type inorganic electrolyte, and the like, which can be used in the preparation of a lithium secondary battery, but are not limited thereto.

Specifically, the electrolyte may include a non-aqueous organic solvent and a metal salt.

As the non-aqueous organic solvent, it is possible to use, for example, an aprotic organic solvent, such as N-methyl-2-pyrrolidinone, propylene carbonate, ethylene carbonate, butylene carbonate, dimethyl carbonate, diethyl carbonate, γ-butyrolactone, 1,2-dimethoxy ethane, tetrahydrofuran, 2-methyl tetrahydrofuran, dimethyl sulfoxide, 1,3-dioxolane, formamide, dimethylformamide, dioxolane, acetonitrile, nitromethane, methyl formate, methyl acetate, phosphate triester, trimethoxy methane, a dioxolane derivative, sulfolane, methyl sulfolane, 1,3-dimethyl-2-imidazolidinone, a propylene carbonate derivative, a tetrahydrofuran derivative, ether, methyl propionate, and ethyl propionate.

In particular, among the carbonate-based organic solvents, cyclic carbonates ethylene carbonate and propylene carbonate may be preferably used because the cyclic carbonates have high permittivity as organic solvents of a high viscosity and thus dissociate a lithium salt well, and such cyclic carbonates may be more preferably used since the cyclic carbonate may be mixed with a linear carbonate of a low viscosity and low permittivity such as dimethyl carbonate and diethyl carbonate in an appropriate ratio and used to prepare an electrolyte having a high electric conductivity.

As the metal salt, a lithium salt may be used, the lithium salt is a material which is easily dissolved in the non-aqueous electrolyte solution, and for example, as an anion of the lithium salt, it is possible to use one or more selected from the group consisting of F⁻, Cl⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻ and (CF₃CF₂SO₂)₂N⁻.

In the electrolyte, for the purpose of improving the service life characteristics of a battery, suppressing the decrease in battery capacity, and improving the discharge capacity of the battery, one or more additives, such as, for example, a halo-alkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, and aluminum trichloride may be further included in addition to the above electrolyte constituent components.

A lithium secondary battery according to an exemplary embodiment of the present invention includes an assembly including a positive electrode, a negative electrode, a separator, and an electrolyte.

An additional exemplary embodiment of the present invention provides a battery module including the above-described lithium secondary battery as a unit cell and a battery pack including the same. The battery module and the battery pack include the secondary battery which has high capacity, high rate properties, and cycle properties, and thus, may be used as a power source of a medium-and-large sized device selected from the group consisting of an electric vehicle, a hybrid electric vehicle, a plug-in hybrid electric vehicle, and a power storage system.

Since the lithium secondary battery according to exemplary embodiments of the present invention stably exhibits excellent discharge capacity, output characteristics, and cycle performance, the lithium secondary battery may be used as a power source for portable devices such as mobile phones, notebook-sized computers and digital cameras, and medium-and-large sized devices selected from the group consisting of electric vehicles, hybrid electric vehicles, plug-in hybrid electric vehicles, and power storage systems. For example, the battery module or battery pack may be used as a power source for one or more medium-and-large sized devices of a power tool; an electric vehicle including an electric vehicle (EV), a hybrid electric vehicle and a plug-in hybrid electric vehicle (PHEV); and a power storage system.

### [Mode for Invention]

Hereinafter, preferred embodiments will be suggested to facilitate understanding of the present invention, but the embodiments are only provided to illustrate the present invention, and it is apparent to those skilled in the art that various alterations and modifications are possible within the scope and technical spirit of the present invention, and it is natural that such alterations and modifications also fall within the accompanying claims.

### Example 1

A copper foil having a thickness of 15 µm was coated with a negative electrode slurry obtained by introducing a negative electrode active material including SiO and a carbon-based active material (including artificial graphite and natural graphite) (SiO is included in an amount of 5 parts by weight based on 100 parts by weight of the total negative electrode active material), three types of conductive materials (including carbon black, CNT, and graphene), a binder (SBR), and a thickener (CMC) into a distilled water solvent at a weight ratio of 95 : 2 : 2 : 1 so as to have a dry thickness of 130 µm, and then dried to manufacture a negative electrode.

The conductive material used in the negative electrode active material layer was prepared by mixing a particulate conductive material (carbon black), a linear conductive material (CNT), and a planar conductive material (graphene) at a weight ratio of 0.95 : 0.05 : 1.0 based on 100 parts by weight of the negative electrode active material.

An aluminum foil having a thickness of 12 µm was coated with a composition for forming a positive electrode active material layer, including a positive electrode slurry obtained by introducing a Ni-based positive electrode active material (Li_{1.0}Ni_{0.86}Co_{0.08}Mn_{0.06}O₂), a conductive material (including carbon black, CNT, and graphene), and a binder (PVDF) into a methyl pyrrolidone (NMP) solvent at a weight ratio of 97.0 : 1 : 2 so as to have a dry thickness of 120 µm, and then dried to manufacture a positive electrode.

The conductive material used in the positive electrode active material layer was prepared by mixing a particulate conductive material (carbon black), a linear conductive material (CNT), and a planar conductive material (graphene) at a weight ratio of 0.35 : 0.05 : 0.6 based on 100 parts by weight of the positive electrode active material.

A battery was manufactured by stacking the positive electrode and the negative electrode with a separator therebetween and injecting an electrolyte solution having a composition of 1 M LiPF6, ethylene carbonate (EC)/ethyl methyl carbonate (EMC) (volume ratio 3/7), and vinylene carbonate (VC) /propane sultone (PS) (included in an amount of 3 parts by weight and 1.5 parts by weight, respectively, based on 100 parts by weight of the electrolyte) thereinto.

FIG. 1 illustrates the results of measuring the resistance characteristics under the conditions of 2.5 C 10-second pulse discharge by setting each of the manufactured batteries to SOC (%).

### Example 2

An aluminum foil having a thickness of 12 µm was coated with a composition for forming a positive electrode active material layer, including a positive electrode slurry obtained by introducing a Ni-based positive electrode active material (Li_{1.0}Ni_{0.86}Co_{0.08}Mn_{0.06}O₂), a conductive material (including carbon black, CNT, and graphene), and a binder (PVDF) into a methyl pyrrolidone (NMP) solvent at a weight ratio of 93.5 : 4.5 : 2 so as to have a dry thickness of 120 µm, and then dried to manufacture a positive electrode, and the procedure was performed in the same manner as in Example 1, except that the positive electrode was manufactured by mixing the conductive material used in the positive electrode active material layer with the particulate conductive material (carbon black), the linear conductive material (CNT), and the planar conductive material (graphene) at a weight ratio of 0.2 : 1.2 : 3.1 based on 100 parts by weight of the positive electrode active material.

### Example 3

A copper foil having a thickness of 15 µm was coated with a negative electrode slurry obtained by introducing a negative electrode active material including SiO and a carbon-based active material (including artificial graphite and natural graphite) (SiO is included in an amount of 5 parts by weight based on 100 parts by weight of the total negative electrode active material), three types of conductive materials (including carbon black, CNT, and graphene), a binder (SBR), and a thickener (CMC) into a distilled water solvent at a weight ratio of 90 : 7 : 2 : 1 so as to have a dry thickness of 130 µm, and then dried to manufacture a negative electrode, and the procedure was performed in the same manner as in Example 1, except that the negative electrode was manufactured by mixing the conductive material used in the negative electrode active material layer with the particulate conductive material (carbon black), the linear conductive material (CNT), and the planar conductive material (graphene) at a weight ratio of 2.5 : 1.2 : 3.3 based on 100 parts by weight of the negative electrode active material.

### Comparative Example 1

The procedure was performed in the same manner as in Example 1, except that the particulate conductive material was used alone in both the positive electrode and the negative electrode.

### Comparative Example 2

The procedure was performed in the same manner as in Example 1, except that the linear conductive material was used alone in both the positive electrode and the negative electrode.

### Comparative Example 3

The procedure was performed in the same manner as in Example 1, except that the planar conductive material was used alone in both the positive electrode and the negative electrode.

### Comparative Example 4

The procedure was performed in the same manner as in Example 1, except that the particulate conductive material and the linear conductive material were used as the negative electrode conductive material.

### Comparative Example 5

The procedure was performed in the same manner as in Example 1, except that the linear conductive material and the planar conductive material were used as the negative electrode conductive material.

### Comparative Example 6

The procedure was performed in the same manner as in Example 1, except that the particulate conductive material and the planar conductive material were used as the negative electrode conductive material.

FIG. 1 illustrates the resistance values depending on the state of charge (SOC) of the batteries manufactured in Examples 1 to 3 and Comparative Examples 1 to 6. It can be confirmed that Examples 1 to 3 exhibit excellent resistance characteristics in the entire state of charge (SOC) compared to Comparative Examples 1 to 6. In this case, for a resistance, a manufactured cell was subjected to constant current/constant voltage (CC/CV) charging (0.05 C-cut) at 0.33 C until 4.2 V, subjected to 0.33 C constant current (CC) discharging (2.5 V-cut) three times, charged, and then discharged at 0.33 C, and set to each SOC (%) to perform a 2.5 C 10 second pulse discharge, thereby measuring the resistance.

## Claims

1. A lithium secondary battery comprising:
a positive electrode, a separator and a negative electrode,
wherein the positive electrode comprises a positive electrode active material and a positive electrode conductive material,
the negative electrode comprises a negative electrode active material and a negative electrode conductive material,
the positive electrode active material comprises a lithium composite transition metal compound including nickel (Ni) and cobalt (Co),
the negative electrode active material comprises silicon oxide, artificial graphite, and natural graphite,
the positive electrode conductive material comprises a particulate conductive material, a linear conductive material, and a planar conductive material, and
the negative electrode conductive material comprises a particulate conductive material, a linear conductive material, and a planar conductive material.

2. The lithium secondary battery of claim 1, wherein the lithium composite transition metal compound comprising nickel (Ni) and cobalt (Co) comprises 80 mol% or more of nickel among the metals except for lithium.

3. The lithium secondary battery of claim 1, wherein the lithium composite transition metal compound comprising nickel (Ni) and cobalt (Co) further comprises at least one of manganese and aluminum.

4. The lithium secondary battery of claim 1, wherein the lithium composite transition metal compound comprising nickel (Ni) and cobalt (Co) is represented by the following Chemical Formula 1:
[Chemical Formula 1] Li_{aN}i_{(1-x-y)}CoₓM1_{y}M2_{w}O₂
in Chemical Formula 1,
1.0≤a≤1.5, 0<x≤0.2, 0≤y≤0.2, 0≤w≤0.1, 0<x+y≤0.2,
M1 is at least one metal of Mn and Al, and
M2 is one or more metal elements selected from the group consisting of Ba, Ca, Zr, Ti, Mg, Ta, Nb, and Mo.

5. The lithium secondary battery of claim 1, wherein the positive electrode comprises 90 parts by weight to 100 parts by weight of the lithium composite transition metal compound comprising nickel (Ni) and cobalt (Co) based on 100 parts by weight of the positive electrode active material.

6. The lithium secondary battery of claim **1,** wherein the silicon oxide is SiOₓ (0<x<2).

7. The lithium secondary battery of claim **1,** wherein the silicon oxide is comprised in an amount of 1 part by weight to 40 parts by weight based on 100 parts by weight of the negative electrode active material.

8. The lithium secondary battery of claim 1, wherein the positive electrode conductive material is comprised in an amount of 0.1 parts by weight to 5 parts by weight based on 100 parts by weight of a positive electrode active material layer comprising the positive electrode active material, and the negative electrode conductive material is comprised in an amount of 0.1 parts by weight to 5 parts by weight based on 100 parts by weight of a negative electrode active material layer comprising the negative electrode active material.

9. The lithium secondary battery of claim 1, wherein the particulate conductive material comprises one or more selected from graphite and carbon black.

10. The lithium secondary battery of claim 1, wherein the linear conductive material comprises one or more selected among a conductive fiber; a conductive tube; fluorocarbon; a metal powder; a conductive whisker; a conductive metal oxide; and a polyphenylene derivative.

11. The lithium secondary battery of claim 1, wherein the planar conductive material comprises one or more selected from graphene and graphite, which are **characterized by** having an aspect ratio of 1:1 to 1:10.

12. The lithium secondary battery of claim 1, wherein the total amount of the particulate conductive material, the linear conductive material, and the planar conductive material comprised in the positive electrode conductive material or the negative electrode conductive material is 0.1 parts by weight to 5 parts by weight based on 100 parts by weight of each of a positive electrode active material layer and a negative electrode active material layer.

13. The lithium secondary battery of claim 1, wherein based on 100 parts by weight of each of a positive electrode active material layer and a negative electrode active material layer, the content of the particulate conductive material is 0.3 parts by weight to 2 parts by weight, the content of the linear conductive material is 0.01 parts by weight to 1 part by weight, and the content of the planar conductive material is 0.5 parts by weight to 3 parts by weight.
